# EUROPÄISCHE PATENTSCHRIFT

(11) **EP 2 747 218 B1**
(45) Veröffentlichungstag und Bekanntmachung des Hinweises auf die Patenterteilung: **25.08.2021**
(21) Anmeldenummer: 13194190.8
(22) Anmeldetag: 25.11.2013
(51) Int. Cl.: H01S 3/04, H01S 3/0941, H01S 3/042, H01S 3/06

(54) **Kühlanordnung für laseraktive Festkörpermaterialien, Laseranordnung und Verfahren zur Kühlung eines laseraktiven Festkörpermaterials**
Cooling assembly for laser active solid materials, laser system and method for cooling a laser active solid material
Agencement de refroidissement pour matériaux solides à effet laser, agencement laser et procédé de refroidissement d'un matériau solide à effet laser

(30) Priorität: 18.12.2012 DE 102012112554
(43) Veröffentlichungstag der Anmeldung: 25.06.2014
(73) Patentinhaber: A.R.C. Laser GmbH, 90411 Nürnberg (DE)
(72) Erfinder: Thyzel, Reinhardt, 90542 Eckental (DE); Hurich, Jörg, 90409 Nürnberg (DE)
(74) Vertreter: Schröer, Gernot H.

(56) Entgegenhaltungen:
- WO-A1-2011/130897
- CN-A- 101 043 118
- DE-T2- 60 220 768
- DE-T2- 69 606 664
- US-A1- 2005 259 704

## Beschreibung

Die Erfindung betrifft eine Laseranordnung mit einer Kühlanordnung zur aktiven Kühlung eines laseraktiven Festkörpermaterials, und ein Verfahren zur aktiven Kühlung eines laseraktiven Festkörpermaterials.

Zur Vermeidung zu hoher Temperaturen bei laseraktiven Festkörpermaterialien, wie beispielsweise YAG (Yttrium-Aluminium-Granat), während des Laserbetriebs ist es bekannt, die laseraktiven Materialien durch Beaufschlagung mit einem Kühlmittel zu kühlen.

Entsprechende Vorrichtungen und Verfahren zur Kühlung von laseraktiven Festkörpermaterialien, insbesondere Laserkristallen und dgl., sind beispielsweise aus der DE 27 51 825 A1, der US 5,608,748, der DE 35 22 443 A1, sowie aus der WO 2011/130897 A1, der DE 602 20 768 T2 und der US 2005/259704 A1 bekannt.

Die DE 27 51 825 A1 beschreibt ein Verfahren, bei welchem das Lasermedium zur Kühlung in einem Kühlmittelbad angeordnet ist und durch Zirkulation des Kühlmittels von diesem longitudinal umströmt wird.

Ein ähnliches Verfahren ist aus der US 5,608,748 bekannt.

Aus der DE 35 22 443 A1 ist ein Verfahren unter Verwendung einer kombinierten Gas-Flüssigkeitskühlung bekannt, wobei die unmittelbare Kühlung des Lasermediums durch ein Kühlgas erfolgt.

Aus der DE696 06 664 T2 ist ein System zur radialen Aufprallkühlung eines seitengepumpten Laserstabs bekannt, bei dem Kühlmittelflüssigkeit durch Düsenlöcher in einen Ringhohlraum um den Laserstab gesprüht wird. Die Kühlmittelflüssigkeit wird dabei in einer im wesentlichen radialen Richtung senkrecht auf den Laserstab gebracht.

Bei den bekannten Verfahren können unter Umständen ungünstige oder ungenügende Kühlleistungen und Kühleigenschaften und Gasblasen im (flüssigen) Kühlmedium auftreten. Insbesondere kann bei den bekannten Verfahren zur Flüssigkeitskühlung der Lasermedien das Auftreten von Gasblasen im Kühlmedium, insbesondere an den Oberflächen des Lasermediums, nicht vollständig vermieden werden, so dass sich Beeinträchtigungen in der Kühlung oder in der Ausgangsstabilität des Lasers ergeben können, insbesondere wenn das Lasermaterial beispielsweise durch das flüssige Kühlmittel hindurch optisch gepumpt wird.

Ausgehend davon ist es eine Aufgabe der Erfindung, die Nachteile nach dem Stand der Technik zu beseitigen. Es soll insbesondere eine Möglichkeit angegeben werden, mit welchem eine verbesserte Kühlung von laseraktiven Festkörpermaterialien erreicht werden kann.

Insbesondere sollen unter diesem Hintergrund eine Laseranordnung mit einer Kühlanordnung zur aktiven Kühlung eines laseraktiven Festkörpermaterials, sowie ein Verfahren zur aktiven Kühlung eines laseraktiven Festkörpermaterials angegeben werden.

Diese Aufgabe wird gelöst durch eine Laseranordnung gemäß Patentanspruch 1 und ein Kühlverfahren gemäß Patentanspruch 11. Ausgestaltungen und Weiterbildungen ergeben sich aus den jeweiligen abhängigen Ansprüchen.

Nach Anspruch 1 ist eine Laseranordnung mit einem laseraktiven Festkörpermaterial, einer Kühlanordnung mit einem flüssigen Kühlmittel zur aktiven Flüssigkühlung eines laseraktiven Festkörpermaterials und einer Pumpstrahlungsquelle zum optischen Pumpen des laseraktiven Festkörpermaterials vorgesehen. Die Kühlanordnung umfasst eine Düseneinheit, welche dazu ausgebildet und eingerichtet ist, das laseraktive Festkörpermaterial mit einem gerichteten Kühlmittelstrahl eines flüssigen Kühlmittels (oder: Kühlmediums) zu beaufschlagen, wobei das laseraktive Festkörpermaterial eine beim optischen Pumpen mit Pumpstrahlung beaufschlagte Pumpfläche aufweist, und wobei die Düseneinheit derart angeordnet, ausgebildet und eingerichtet ist, dass nur eine die Pumpfläche beinhaltende Teilfläche der Oberfläche des laseraktiven Festkörpermaterials mit dem Kühlmittelstrahl aus flüssigem Kühlmittel beaufschlagt wird, wobei die mit dem Kühlmittelstrahl beaufschlagte Teilfläche der Oberfläche des laseraktiven Festkörpermaterials die beim optischen Pumpen mit Pumpstrahlung der Pumpstrahlungsquelle beaufschlagte Pumpfläche an der Oberfläche des laseraktiven Festkörpermaterials beinhaltet, und wobei der Kühlmittelstrahl parallel zur oder schräg zur Teilfläche der Oberfläche des laseraktiven Festkörpermaterials gerichtet ist.

Anspruch 11 betrifft ein Verfahren zur aktiven Kühlung eines laseraktiven Festkörpermaterials.

Im Folgenden werden besondere und vorteilhafte Ausführungsformen gemäß der Erfindung beschrieben, die in der Kühlanordnung, Laseranordnung und dem Kühlverfahren zum Einsatz kommen können.

Die Laseranordnung kann als laseraktives Festkörpermaterial ein YAG-Material umfassen.

Vorteilhafterweise ist zwischen der Düseneinheit oder deren Düse(n) und dem laseraktiven Festkörpermaterial eine Gasatmosphäre, insbesondere Luft, angeordnet, in der sich der gerichtete Kühlmittelstrahl als freier Strahl bis zur Oberfläche des laseraktiven Festkörpermaterials ausbreitet.

In einer weiteren vorteilhaften Ausführungsform gemäß der Erfindung breitet sich der gerichtete Kühlmittelstrahl in der an das laseraktive Festkörpermaterial angrenzenden Gasatmosphäre, insbesondere Luft, als freier Strahl bis zur Oberfläche des laseraktiven Festkörpermaterials aus, trifft dann in einem Auftreff- oder einem Aufprallbereich auf das laseraktive Festkörpermaterial und strömt nun an dessen zu kühlender Oberfläche als, vorzugsweise laminarer, Strömungsfilm (oder: Oberflächenströmung) entlang, wobei die Strömungsrichtung oder der Strömungsverlauf des Strömungsfilms (oder der Oberflächenströmung) durch die Richtung des Kühlmittelstrahls relativ zur Oberfläche und durch die Gestalt der überströmten Oberfläche bestimmt wird. Quer zur Strömungsrichtung gesehen ist die Breite des Strömungsfilms oder Kühlmittelstrahls vorzugsweise wenigstens so groß wie die Querabmessung der Teilfläche gewählt, so dass das Kühlmittel die Teilfläche des laseraktiven Festkörpermaterials in der gesamten Breite ist.

In einem Abriss- oder Abhebbereich verlässt das Kühlmittel vorzugsweise wieder die Oberfläche des laseraktiven Festkörpermaterials, d.h. das Kühlmittel hebt ab oder der Strömungsfilm (oder die Oberflächenströmung) reißt von der Oberfläche ab, und breitet sich im Allgemeinen wieder als freier Kühlmittelstrahl wenigstens ein Stück weit weiter aus.

Durch die Verwendung des gerichteten Kühlmittelstrahls in der Flüssigkühlung gemäß der Erfindung kann, insbesondere gegenüber einem Kühlmittelbad oder einer mittels Wänden geführten Umströmung des laseraktiven Festkörpermaterials mit Kühlmittel nach dem Stand der Technik, die Kühlleistung präziser eingestellt und angepasst werden, insbesondere auf die jeweilige Betriebsweise. Abgesehen davon hat sich gezeigt, dass bei Verwendung eines Kühlmittelstrahls die Ausbildung von Gasblasen im Kühlmedium, insbesondere an der gekühlten Oberfläche, deutlich verringert werden kann, was zur Verbesserung der Kühlleistung und, beim optischen Pumpen des laseraktiven Festkörpermaterials durch das Kühlmittel hindurch, zu reduzierter Beeinträchtigung des Pumpvorgangs führt. Insgesamt kann also eine verbesserte Kühlung erreicht werden.

Diese Art der Kühlung gemäß der Erfindung hat sich insbesondere wegen der Möglichkeit der Ausbildung eines sich an der zu kühlenden Oberfläche ausbildenden, insbesondere lateral nach unten gerichteten, laminaren Kühlmittelfilms als besonders vorteilhaft erwiesen.

Beim Begriff "Kühlmittelstrahl" soll der Wortbestandteil "Strahl" insbesondere in seiner ursprünglichen Bedeutung, insbesondere im Sinne eines nicht überall durch Wände geführten Stroms, verstanden werden. Damit unterscheidet sich die Verwendung eines Kühlmittelstrahls von den aus dem Stand der Technik bekannten Kühlmittelbädern oder der Zirkulation von Kühlmittel im Kühlmittelbad, denn bei diesen Systemen sind die Kühlmittelströme stets überall durch Wände, Wandungen, insbesondere Rohrwandungen, begrenzt.

Erfindungsgemäß ist der Kühlmittelstrahl parallel zur oder schräg zur Teilfläche der Oberfläche des laseraktiven Festkörpermaterials gerichtet, bevorzugt unter einem Einfallswinkel im Bereich von 0 Grad bis 10 Grad, insbesondere 0,5 Grad bis 10 Grad. Durch einen schrägen Einfall des Kühlmittelstrahls kann insbesondere die Ausbildung eines sich über die beaufschlagte Oberfläche erstreckenden laminaren, insbesondere filmartigen, Kühlmittelstroms begünstigt werden. Bei einem entsprechenden, laminaren Kühlmittelstrom kann eine Blasenbildung im Kühlmittel weitestgehend, wenn nicht gänzlich, vermieden werden, was sich vorteilhaft auf Kühlung und Laserabstrahlung auswirken kann. Die genannten Winkelbereiche haben sich insbesondere bei lateralen, bei ordnungsgemäßem Einsatz vertikalen, Seitenflächen als vorteilhaft erwiesen. Bei lateralen Seitenflächen kann durch Beaufschlagung mit dem Kühlmittelstrahl im Bereich einer oberen Längskante der Seitenfläche ein nach unten fließender, laminarer Kühlmittelstrom, insbesondere in Form eines Kühlmittelfilms, erreicht werden. Auf diese Weise kann ein besonders großer Anteil der jeweiligen Seitenfläche gekühlt werden.

In einer Ausgestaltung des Verfahrens wird als Kühlmittelstrahl ein Flachstrahl, insbesondere ein Parallel-Flachstrahl verwendet. Wie weiter oben bereits erwähnt kann mit einem Flachstrahl, insbesondere einem Parallel-Flachstrahl eine lineare Auftreffzone, d. h. Auftrefflinie, an der zu kühlenden Oberfläche erreicht werden. Das ist insbesondere für eine besonders gleichmäßige Kühlung des laseraktiven Materials von Vorteil. Zusätzlich wird auf die Ausführungen weiter oben verwiesen.

Die Düseneinheit weist im Allgemeinen zumindest eine Düse auf, die vorzugsweise einen, bevorzugt rohrförmigen, Düsenkörper und eine, bevorzugt flachdüsenartige, Düsenmündung aufweist. Die Breite der Düsenmündung, die der Dicke des Kühlmittelstrahls beim Austritt entspricht, ist deutlich kleiner als die Länge der Düsenmündung, die der Breite des Kühlmittelstrahls beim Austritt entspricht, und liegt bevorzugt in einem Bereich zwischen 100 µm und 1000 µm.

Eine Breite des Kühlmittelstrahls quer zu seiner Strahlrichtung kann einige Millimeter bis hin zu 10 mm betragen. Angemerkt soll an dieser Stelle werden, dass sich die genannten Werte, insbesondere der Einfallswinkel, im Hinblick auf eine effiziente Kühlung des laseraktiven Festkörpermaterials, insbesondere eines YAG, vorzugsweise eines Erbium:YAG, basierten Lasermaterials, als besonders vorteilhaft erwiesen haben.

Die Strömungsgeschwindigkeit des Kühlmittels im Kühlmittelstrahl, insbesondere nach dem Austritt aus der Düse oder Düseneinheit, beträgt bei der Kühlanordnung und der Laseranordnung und dem Verfahren gemäß der Erfindung im Allgemeinen mindestens 2 m/s, insbesondere zwischen 2 m/s und 50 m/s, bevorzugt zwischen 5 m/s und 10 m/s und vorzugsweise zwischen 8 m/s und 10 m/s.

Abgesehen von den genannten Düsenkörpern und Düsenmündungsformen können auch andere, jeweils geeignete, Formen verwendet werden. Die Verwendung einer Flachdüse hat sich bei quaderförmigen, insbesondere stabartig quaderförmigen, laseraktiven Festkörpermaterialien mit rechteckigen Oberflächen, insbesondere Seitenflächen, als vorteilhaft erwiesen. Grund hierfür kann u.a. darin gesehen werden, dass mit einer Flachdüsengeometrie ein Parallel-Flachstrahl erzeugt werden kann. Ein entsprechender Parallel-Flachstrahl weist eine lineare Auftreffzone, d. h. Auftrefflinie, auf der entsprechenden Oberfläche auf, wobei entlang der Auftrefflinie eine annähernd konstante Kühlung bzw. Kühlleistung erreicht werden kann. Der Parallel-Flachstrahl kann vorteilhafter Weise so eingestellt werden, dass die Auftrefflinie entlang einer Kante der rechteckigen Oberfläche verläuft. Auf diese Weise kann erreicht werden, dass ein möglichst großer Flächenanteil der jeweiligen Oberfläche mit Kühlmedium beaufschlagt, d. h. gekühlt, werden kann.

Insbesondere bei Flachdüsen kann der Kühlmittelstrahl in Breite und Dicke an die jeweiligen Anforderungen angepasst werden. Beispielsweise kann die Breite der Flachdüse und damit des Kühlmittelstrahls an die Breite bzw. Ausdehnung der zu kühlenden Oberfläche angepasst werden, wohingegen durch die Dicke des Kühlmittelstrahls die Flussmenge und damit verbunden u.a. die Kühlleistung eingestellt werden kann. Abgesehen von einem Parallel-Flachstrahl können auch andere Strahlgeometrien verwendet werden, wie insbesondere Fächerstrahle usw.

Insgesamt kann gemäß der Erfindung eine optimierte Kühlung bei gleichzeitig geringer Beeinträchtigung der Laseranregung und Laseremission erreicht werden.

Bei dem laseraktiven Festkörpermaterial kann es sich insbesondere um ein Laserkristallmaterial oder einen Laserkristall handeln. Beispielsweise eignet sich die vorliegende Erfindung, ohne Beschränkung der Allgemeinheit, für YAG (Yttrium-Aluminium-Granat) basierte Lasermaterialien, insbesondere in Erbium:YAG-, Nd (Neodym):YAG oder auch Ho (Holmium):YAG-Lasern, oder auch für Vanadat (Yttrium-Vanadium-Oxid) oder YSGG (Yttrium-Scandium-Gallium-Granat) basierte Lasermaterialien.

Die zu kühlende Teilfläche mit der Pumpfläche ist bevorzugt eine parallel zur die Laser(emissions)richtung bildenden Axialrichtung des laseraktiven Festkörpermaterials verlaufende laterale Seitenfläche.

Bei einer Anordnung, bei welcher das Lasermaterial über laterale Seitenflächen optisch gepumpt wird, wobei eine Emission der Laserstrahlung an axialen Stirnflächen erfolgt, werden die Lasermaterialien vorzugsweise an der mit Pumpstrahlung beaufschlagten Seite gekühlt. Dabei kommen vorzugsweise für entsprechende Pumpstrahlungsquellen durchlässige oder transparente Kühlmittel zur Anwendung, die die durchtretende Pumpstrahlung möglichst wenig absorbieren oder reflektieren. Gerade wegen der bei erfindungsgemäßer Verwendung eines Kühlmittelstrahls deutlich reduzierten Gasblasenbildung kann ein durch das Kühlmedium hindurch erfolgender Pumpvorgang und damit schlussendlich die Laseremission verbessert werden.

Diese Ausgestaltung eignet sich insbesondere für lateral optisch gepumpte laseraktive Festkörpermaterialien, wie z.B. Erbium:YAG, denn es kann insbesondere die jeweils mit Pumpstrahlung beaufschlagte und sich infolgedessen stärker erwärmende Seitenfläche (und damit in der Regel auch das komplette Lasermaterial) optimal gekühlt werden.

Als Kühlmittel kann insbesondere Wasser, bevorzugt deionisiertes Wasser, oder ein beliebiges anderes, zur Ausbildung eines Kühlmittelstrahls geeignetes, flüssiges Kühlmittel verwendet werden.

In einer weiteren Ausgestaltung ist vorgesehen, dass die Kühlanordnung des Weiteren eine Halterung mit einem ersten Haltesegment und einem zweiten Haltesegment umfasst. Das erste Haltesegment ist dazu eingerichtet das, bevorzugt in Quaderform vorliegende, laseraktive Festkörpermaterial zu haltern. Das zweite Haltesegment ist dazu eingerichtet, die zumindest ein Düse der Düseneinheit zu haltern, fixieren und/oder auszurichten. Bevorzugt sind das erste und zweite Haltesegment einstückig ausgebildet. Allerdings ist es auch möglich, dass die beiden Haltesegmente als miteinander verbindbare Einzelteile ausgebildet sind.

Eine Halterung entsprechend der vorgenannten Ausgestaltung ist besonders vorteilhaft zur genauen Positionierung und Justierung des laseraktiven Festkörpermaterials und/oder der zumindest einen Düse. Zur Positionierung, Fixierung und/oder Justierung kann die Halterung insbesondere Halte-, Fixier- oder Positioniermittel, insbesondere Halte-, Fixier- und/oder Positionierschrauben oder -schraublöcher usw. aufweisen. Ferner ermöglicht eine wie vorliegend aus wenigen Elementen oder Segmenten aufgebaute Halterung eine vergleichsweise offene Positionierung der zu kühlenden Oberfläche/n, was für die Beaufschlagung mit einem gerichteten Strahl an Kühlmittel von Vorteil bzw. in gewissem Maße erforderlich ist. Eine allzu geschlossene Positionierung der zu kühlenden Oberfläche könnte unter Umständen, insbesondere bei hohen Flussmengen, dazu führen, dass sich anstatt des hier vorgeschlagenen gerichteten Kühlmittelstrahls und des laminaren Kühlmittelfilms durch Rückstau ein Kühlmittelbad einstellt, was sich aus besagten Gründen als nachteilig erweisen kann.

Nach einer weiteren Ausgestaltung umfasst das erste Haltesegment zwei parallele, zueinander fluchtende und voneinander beabstandete Seitenwandungen bzw. Platten oder Seitenplatten. Die Seitenwandungen sind dazu ausgebildet und eingerichtet das laseraktive Festkörpermaterial, welches insbesondere eine stabartig quaderförmige Form aufweisen kann, bevorzugt spannungsfrei, d. h. unter Vermeidung von Zug- Druck- und/oder Biegespannungen, zu lagern.

Die Verwendung von Seitenwandungen als Haltesegmente für das laseraktive Festkörpermaterial bietet unter anderem den Vorteil, dass im Zwischenraum zwischen den Seitenwandungen ein vergleichsweise offener Raum zur Positionierung des laseraktiven Festkörpermaterials geschaffen werden kann, der, wie oben erwähnt, bei der hier vorgeschlagenen Verwendung eines gerichteten Kühlmittelstrahls von Vorteil ist. Gleichzeitig bieten die Seitenwandungen in Normalenrichtung, in welche bei geeigneter Anordnung des laseraktiven Festkörpermaterials Laserstrahlung ausgekoppelt werden kann, eine Art Schutz vor Beaufschlagung mit Kühlmittel, etwa durch Spritzer.

In einer Weiterbildung weist die Halterung als zweites Haltesegment eine quer, insbesondere senkrecht, zu den Seitenwandungen verlaufende Stirnwandung auf. Die Stirnwandung ist dazu ausgebildet und eingerichtet die zumindest eine Düse, bevorzugt derart, zu haltern, dass die Düsenmündung einer durch das zweite Haltesegment gehalterten Düse im Volumen bzw. Raum zwischen den Seitenwandungen positionierbar ist. Die Positionierung zwischen den Seitenwandungen ist bevorzugt derart eingestellt, dass eine zwischen den Seitenwandungen verlaufende Oberfläche, insbesondere laterale oder vertikale Seitenfläche, des laseraktiven Festkörpermaterials mit dem gerichteten Kühlmittelstrahl beaufschlagbar ist. Eine entsprechende Seitenfläche kann beispielsweise in Normalenrichtung der Seitenwandungen verlaufen.

Bei Verwendung einer, insbesondere oberen, Stirnwandung als Halteelement für die zumindest eine Düse kann insbesondere im Bereich der Beaufschlagung des laseraktiven Festkörpermaterials ein für den Kühlmittelstrahl ausreichend offener Aufbau, insbesondere der Halterung, erreicht werden. Davon abgesehen bietet die Anordnung der Düse/n oberhalb des laseraktiven Festkörpermaterials den Vorteil, dass die entsprechende Oberfläche schräg von oben mit dem Kühlmittelstrahl beaufschlagt werden kann, wodurch sich ein nach unten gerichteter, besonders effektiver, laminarer Kühlmittelstrom bzw. Kühlmittelfilm ausbilden kann.

Nach einer weiteren Ausgestaltung ist vorgesehen, dass die Seitenwandungen zwei, insbesondere zueinander fluchtende, Durchbrüche aufweisen. Die Durchbrüche sind derart ausgebildet und jeweils so auf den Seitenwandungen positioniert, dass in diesen ein im Querschnitt der Kontur der Durchbrüche angepasstes, insbesondere stabartig quaderförmig ausgebildetes, laseraktives Festkörpermaterial gelagert werden kann, wobei das laseraktive Festkörpermaterial die Durchbrüche durchgreift und an voneinander abgewandten freien axialen Enden in den Durchbrüchen, bevorzugt spannungsfrei, gelagert ist. Bei dieser Anordnung kann das zwischen den Seitenwandungen befindliche Segment des laseraktiven Festkörpermaterials mit insbesondere Pumpstrahlung und dem Kühlmittelstrahl beaufschlagt werden. Gleichzeitig können bzw. sind die axialen Stirnflächen des laseraktiven Festkörpermaterials, an welchen Endspiegel und Auskoppelspiegel angeordnet sein können, auf der vom Zwischenraum abgewandten Seite der Seitenwandungen angeordnet und durch diese vom Kühlmittel abgeschirmt bzw. geschützt. So kann i.d.R eine unmittelbare Beeinträchtigung der Laseremission durch Kühlmittel vermieden werden.

Ein an die Innenkontur der Durchbrüche angepasster Querschnitt des laseraktiven Festkörpermaterials ist insoweit von Vorteil als dadurch eine definierte Positionierung und Ausrichtung des laseraktiven Festkörpermaterials erreicht werden kann. Das ist auch von Vorteil für die Positionierung und Justierung der zumindest einen Düse.

Nach einer weiteren Ausgestaltung umfasst die Kühlanordnung des Weiteren zwei Dichtelemente, welche dazu ausgebildet und eingerichtet sind, jeweils ein freies axiales Ende eines die Durchbrüche durchgreifenden laseraktiven Festkörpermaterials zumindest entlang der Innenkontur des jeweiligen Durchbruchs, bevorzugt kühlmitteldicht, abzudichten. So kann, insbesondere über die bereits genannten Maßnahmen hinaus, eine störungsfreie Laseremission an axialen Stirnflächen erreicht werden.

Bevorzugter Weise sind die Dichtelemente mit den Seitenwandungen, beispielsweise an voneinander abgewandten Seiten der Seitenwandungen, in austauschbar lösbarer Weise verbindbar. Bei Anordnung der Dichtelemente außerhalb des zwischen den Seitenwandungen ausgebildeten Raums kann das zur Anregung von Laserstrahlung zugängliche Volumen zwischen den Seitenwandungen maximiert werden, wobei zum optischen Pumpen des laseraktiven Materials der gesamte Abschnitt zwischen den Seitenwandungen verwendet werden kann.

Nach einer weiteren Ausgestaltung weist jedes Dichtelement ein Dichtmittel und eine Druckplatte auf. Durch die Druckplatte kann ein zugeordnetes Dichtelement im montierten Zustand mit einer in Richtung der jeweiligen Seitenwandung wirkenden Kraft beaufschlagt werden. Auf diese Weise, insbesondere bei Verwendung elastischer Dichtelemente, kann neben einer Dichtwirkung noch eine Zentrierung und Fixierung des laseraktiven Festkörpermaterials erreicht werden. Letzteres ermöglicht insbesondere eine vergleichsweise einfache Montage des laseraktiven Festkörpermaterials. Das Dichtelement kann damit in gewisser Weise auch als Befestigungs- und Fixierelement für das laseraktive Festkörpermaterial gesehen werden.

In einer Weiterbildung weisen die Durchbrüche in Axialrichtung, d. h. in Richtung der durch die jeweilige Druckplatte unmittelbar entstehende Kraft, sich verjüngende Querschnitte auf. Mit dieser Maßnahme kann erreicht werden, dass aus den auf die Dichtelemente axial wirkenden Kräften radial wirkende Kraftkomponenten erzeugt werden, durch welche neben einer verbesserten Dichtwirkung u.a. auch die Klemmung des laseraktiven Festkörpermaterials in den Durchbrücken verbessert werden kann.

Insgesamt wird deutlich, dass die vorgeschlagene Kühlanordnung eine besonders vorteilhafte und effektive Kühlung ermöglicht.

Vorzugweise wird mittels des Kühlmittelstrahls die vom Kühlmittel beaufschlagte Teilfläche, insbesondere die Pumpfläche, neben dem Kühleffekt auch noch von Ablagerungen oder Verschmutzungen freigehalten oder befreit (gereinigt), was die optischen Eigenschaften verbessert.

Ausführungsbeispiele der Erfindung werden nachfolgend anhand von Figuren näher beschrieben. Es zeigen:
- FIG 1: eine dreidimensionale Schnittdarstellung einer Kühlanordnung zur aktiven Flüssigkühlung eines Laserkristalls;
- FIG 2: eine zu FIG 1 korrespondierende dreidimensionale Schnittdarstellung einer die Kühlanordnung umfassenden Laseranordnung;
- FIG 3: eine perspektivische Ansicht der Kühlanordnung nach FIG 1;
- FIG 4: eine perspektivische Ansicht der Laseranordnung nach FIG 2;
- FIG 5: eine perspektivische Darstellung einer Halterung der Kühlanordnung;
- FIG 6: eine erste Seitenansicht der Halterung;
- FIG 7: eine zweite Seitenansicht der Halterung;
- FIG 8: eine Ansicht der Halterung von oben;
- FIG 9: eine Ansicht der Halterung von unten;
- FIG 10: eine perspektivische Ansicht einer Druckplatte der Halterung;
- FIG 11: eine perspektivische Ansicht einer Düse der Kühlanordnung;
- FIG 12: eine erste axiale Draufsicht auf die Düse; und
- FIG 13: eine zweite axiale Draufsicht auf die Düse.

Soweit nicht anderweitig beschrieben, werden in den Figuren gleiche Elemente und Größen mit den gleichen Bezugszeichen bezeichnet.

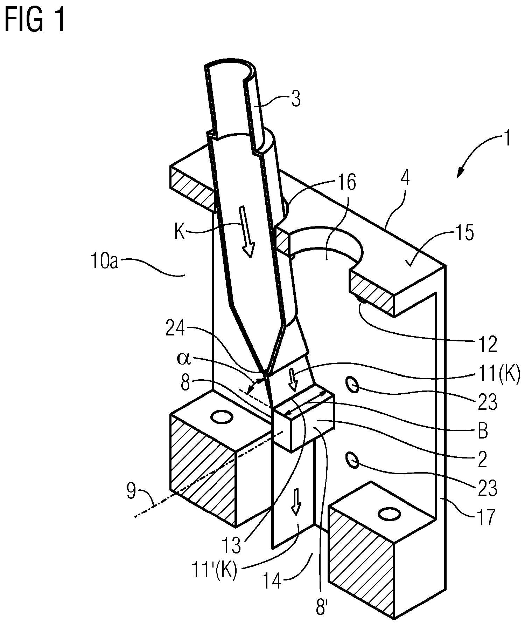

FIG 1 zeigt eine dreidimensionale Schnittdarstellung einer Kühlanordnung 1 zur aktiven Flüssigkühlung eines Laserkristalls 2, insbesondere eines YAG-Laserkristalls, oder allgemein eines laseraktiven Festkörpermaterials. Die Kühlanordnung 1 umfasst eine Düseneinheit mit einer Düse 3, und ferner eine Halterung 4.

Die Halterung 4 ist dazu ausgebildet und dazu angepasst, den Laserkristall 2 zu haltern, insbesondere derart, dass durch die Halterung 4 keine zusätzlichen Spannungen oder Verspannungen im Laserkristall 2 hervorgerufen werden. Insoweit ist die Halterung 4 dazu ausgebildet, den Laserkristall 2 spannungsfrei zu haltern. Die Halterung 4 ist ferner dazu ausgebildet, eine Düseneinheit zur Kühlung des Laserkristalls 2 zu haltern.

Die Halterung 4 ist, wie insbesondere aus den Figuren ersichtlich ist, als einstückiges Element oder Bauteil ausgebildet, umfasst jedoch, insbesondere bei funktioneller Betrachtung, mehrere Segmente, insbesondere Haltesegmente, auf die weiter unten näher eingegangen wird.

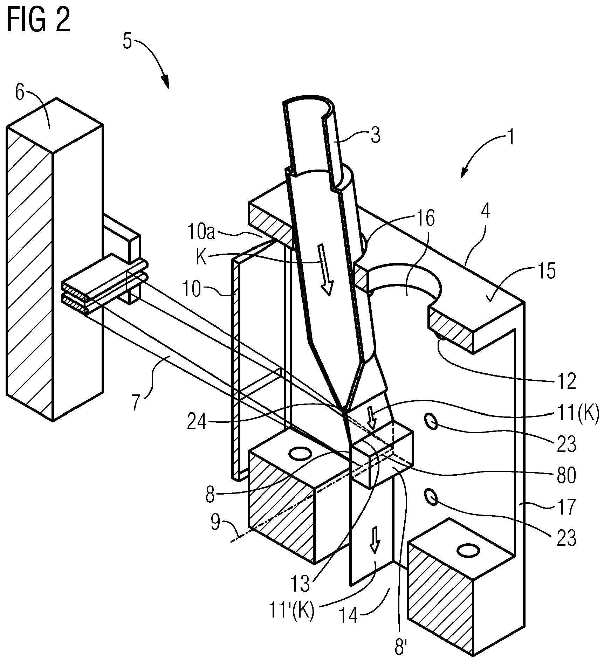

Das in FIG 1 gezeigte Halteelement 4 sowie die Kühlanordnung 1, einschließlich des Laserkristalls 2, können bei Lasern, insbesondere bei einer wie in FIG 2 im dreidimensionalen Schnitt dargestellten Laseranordnung 5, verwendet werden. Die in FIG 2 gezeigte Laseranordnung 5 umfasst neben den bereits in FIG 1 gezeigten Elementen des Weiteren eine Pumpstrahlungsquelle, insbesondere eine Pumplichtquelle 6. Die Pumpstrahlungsquelle 6 ist dazu vorgesehen, den Laserkristall 2 optisch zu pumpen und dadurch zur Laseremission anzuregen.

Der Laserkristall 2 hat eine Axialrichtung (oder: Laseremissionsrichtung) 9, die der Richtung der Laseremission entspricht. An den in Axialrichtung 9 gelegenen Stirnseiten des Laserkristalls 2 sind (nicht gezeigte) End- bzw. Auskoppelspiegel vorhanden. Der Laserkristall 2 ist vorzugsweise quader- oder stabförmig ausgebildet. Parallel (oder: axial oder longitudinal) zur Axialrichtung 9 verlaufen eine eben oder flach ausgebildete Seitenfläche 8 des Laserkristalls 2 und eine gegenüberliegende ebenfalls ebene Seitenfläche 8' des Laserkristalls 2, jeweils vertikal angeordnet im dargestellten Ausführungsbeispiel. Die axiale Länge des Laserkristalls 2 und seiner Seitenwände 8 und 8' ist in FIG 1 mit B bezeichnet.

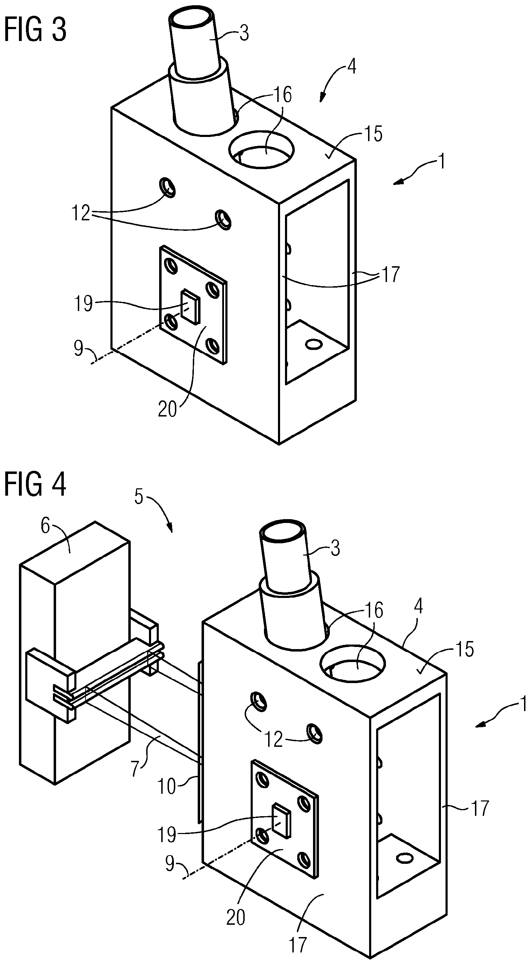

In dem in FIG 2 gezeigten Fall, und im Übrigen auch in FIG 4, ist die Pumpstrahlungsquelle 6 so angeordnet, dass eine davon ausgehende Pumpstrahlung 7 auf eine kleine Teilfläche der Seitenfläche 8 des Laserkristalls 2, die als Pumpfläche 80 bezeichnet ist, eingestrahlt wird (laterales Pumpen).

Hinsichtlich des Begriffs "laterales Pumpen" sei noch erwähnt, dass entsprechend der in den Figuren gezeigten gewöhnlichen Betriebsposition von Halterung 4 und Laserkristall 2 die Pumprichtung, d. h. die Einfallsrichtung der Pumpstrahlung 7, senkrecht zur Seitenfläche 8 oder zur Axialrichtung 9 des Laserkristalls liegt (lateral, transversal).

Der die Einfallsrichtung der Pumpstrahlung 7 betreffende Begriff "lateral" oder "seitlich" ist also insbesondere so zu verstehen, dass der Laserkristall 2 quer, insbesondere senkrecht, zur Richtung der Laseremission, also zur Axialrichtung 9, gepumpt wird. Die Pumpstrahlung 7 als solche wird in der Darstellung der FIG 2 und FIG 4 in horizontaler Richtung emittiert, und wird, insbesondere in dem gezeigten Beispiel, über ein Eintrittsfenster 10 (FIG 2, FIG 4), welches fokussierende Eigenschaften aufweisen kann, auf die Pumpfläche 80 des Laserkristall 2 fokussiert.

Es sei angemerkt, dass das Eintrittsfenster 10 und etwaige weitere, die Pumpstrahlung 7 fokussierende Elemente der Pumpstrahlungsquelle 6 auch anders angeordnet sein können. Das Eintrittsfenster 10 ist im Bereich einer seitlichen bzw. lateralen, vorliegend horizontalen Stirnseite der Halterung 4 angeordnet, und überdeckt, zumindest teilweise, eine durch die offene Bauweise der Halterung an der Stirnseite vorhandene Eintrittsöffnung 10a.

In dem in den Figuren gezeigten Ausführungsbeispiel ist die Halterung 4 insoweit symmetrisch ausgebildet als der Laserkristall 2 über beide laterale Seitenflächen 8 und 8' gepumpt werden kann. Das heißt, dass der Laserkristall 2 wie in FIG 2 gezeigt von links, und bei entsprechender Anordnung einer weiteren Pumpstrahlungsquelle auch von rechts, insbesondere von beiden Seiten, gepumpt werden kann.

Es sei angemerkt, dass bei Beibehaltung des hierin vorgeschlagenen Kühlprinzips für den Laserkristall 2 auch andere als die gezeigten Anordnungen, insbesondere von Laserkristall 2 und Pumpstrahlungsquelle 7 möglich sind.

Durch die Beaufschlagung des Laserkristalls 2 mit der Pumpstrahlung 7 wird der Laserkristall 2, insbesondere an der mit Pumpstrahlung 7 beaufschlagten Pumpfläche 80 und der umliegenden Bereiche der Seitenfläche 8, erwärmt. Da insbesondere eine Erwärmung des Laserkristalls 2 der Laseremission abträglich sein kann, ist es erforderlich, den Laserkristall 2 zu kühlen, was in den gezeigten Ausführungsbeispielen unter Verwendung der Düse 3 bzw. einer Düsenanordnung der Kühlanordnung 1 erfolgt.

Wie insbesondere aus FIG 1 und FIG 2 ersichtlich ist, wird durch die Düse 3 ein gerichteter Kühlmittelstrahl 11 von flüssigem Kühlmittel K erzeugt.

Die Strömungsgeschwindigkeit des Kühlmittels im Kühlmittelstrahl, insbesondere nach dem Austritt aus der Düse 3 oder Düseneinheit, beträgt im Allgemeinen mindestens 2 m/s, insbesondere zwischen 2 m/s und 50 m/s, bevorzugt zwischen 5 m/s und 10 m/s und vorzugsweise zwischen 8 m/s und 10 m/s.

Die Düse 3 ist so ausgebildet und eingerichtet, dass der Kühlmittelstrahl 11 auf die gepumpte Seitenfläche 8 unter einem geeigneten Einfallswinkel 90° - α auftrifft, der im dargestellten Ausführungsbeispiel dem Winkel zur Vertikalen oder zur Ebene der Seitenfläche 8 entspricht, wobei α der dargestellte Inzidenzwinkel zur Flächennormalen zur Seitenfläche 8, hier also der Horizontalen, ist.

Der Einfallswinkel 90° - α gegenüber der Seitenfläche 8 kann für die in den Figuren gezeigten Anordnungen insbesondere im Bereich von 0,5 Grad bis 10 Grad liegen, also der Inzidenzwinkel α entsprechend zwischen 80° und 89,5°. Solche Einfallswinkel haben sich im Hinblick auf die Ausbildung einer laminaren Kühlmittelströmung oder eines laminaren Strömungsfilms entlang der Seitenfläche 8 als günstig erwiesen, insbesondere bei Verwendung von Wasser oder deionisiertem Wasser als Kühlmittel. Auch eine zur Seitenfläche 8 parallele Anordnung des Kühlmittelstrahls 11 mit 90° - α = 0° ist grundsätzlich möglich, erfordert aber eine genauere Justierung. Bei Verwendung anderer Kühlmittel, insbesondere mit anderen Eigenschaften, insbesondere anderer Viskosität und/oder Adhäsion, können gegenüber Wasser andere Einfallswinkel 90° - α erforderlich sein. Hierzu kann beispielsweise die Düse 3 entsprechend der jeweiligen Anforderungen in der Halterung 4 ausgerichtet und fixiert werden.

Zur Fixierung der Düse 3, insbesondere entsprechend der für den jeweiligen Einfallswinkel 90° - α erforderlichen Ausrichtung, kann die Halterung 4 Stell-, Arretier- und Fixierelemente aufweisen. Wie insbesondere aus FIG 3 und FIG 4, welche die gesamte Kühlanordnung 1 korrespondierend zur FIG 1 und FIG 2 in perspektivischer Ansicht zeigen, ersichtlich ist, umfassen die Stell-, Arretier- und Fixierelement im vorliegenden Beispiel Schrauböffnungen 12 anhand welcher die Düse 3 mittels (nicht gezeigten) Stell- und Fixierschrauben befestigt und geeignet fixiert werden kann.

Der von der entsprechend ausgerichteten Düse 3 ausgehende Kühlmittelstrahl 11 trifft, wie in FIG 1 und FIG 2 ersichtlich ist, an einer Auftrefffläche in der Nähe der oberen Längskante 13 auf die gepumpte Seitenfläche 8 auf. Wie sich gezeigt hat, stellt sich insbesondere auf Grund des gegenüber der Seitenfläche 8 um den Einfallswinkel α geneigten Kühlmittelstrahls 11, insbesondere bei geeigneter Strömungsgeschwindigkeit des Kühlmittels, stromabwärts des Auftreffpunkts des Kühlmittelstrahls 11 und entlang der Oberfläche der Seitenfläche 8 eine laminare Kühlmittelströmung ein. Es hat sich ferner gezeigt, dass die sich ausbildende laminare Kühlmittelströmung im Wesentlichen frei von Luft- oder Gasblasen ist, so dass nicht zuletzt deswegen eine besonders vorteilhafte Kühlwirkung erreicht werden kann.

Nach Überstreichen des Laserkristalls 2, insbesondere der Seitenfläche 8 des Laserkristalls 2, kann das Kühlmittel K bei der in den Figuren gezeigten Halterung 4 über eine untere Stirnfläche, d. h. über eine im Boden der Halterung 4 vorhandene Abflussöffnung 14, abfließen.

Das abgeflossene Kühlmittel kann wieder in einem nicht näher dargestellten Auffangbereich gesammelt und dem Kühlkreislauf zurückgeführt werden, so dass ein geschlossener Kühlmittelkreislauf verwirklicht ist.

Zur geeigneten Befestigung und Positionierung des Laserkristalls 2 und der Düse 3 weist die Halterung 4, obgleich der vorliegend beispielhaft einstückigen Ausbildung, ein erstes Haltesegment auf, welches zur Halterung, Positionierung und Fixierung des Laserkristalls 2 ausgebildet ist, und ein zweites Haltesegment, welches zur Halterung, Positionierung und Fixierung der Düse 3 ausgebildet ist. Es sei angemerkt, dass die Halterung 4 auch zwei- oder mehrstückig ausgebildet sein kann, wobei insbesondere eine Unterteilung in einzelne Haltesegmente möglich ist.

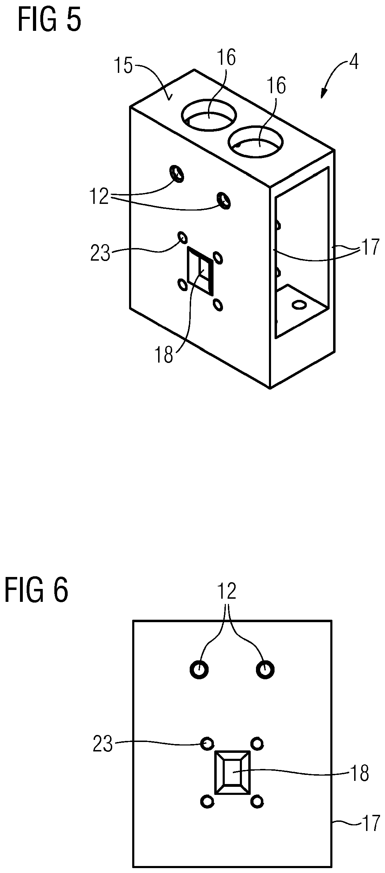

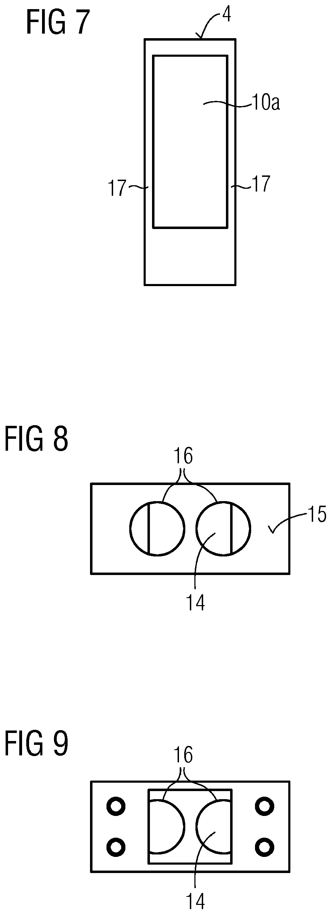

Die Halterung 4 wird nachfolgend unter Bezugnahme auf FIG 1 bis FIG 4, sowie auf die weiteren Figuren FIG 5 bis FIG 9 genauer beschrieben.

Zur Befestigung und Positionierung der Düse 3 weist die Halterung 4 vorliegend an einer oberen Stirnseite 15 zwei Haltebohrungen 16 auf. In diese Haltebohrungen 16 kann die Düse eingeführt und relativ zum Laserkristall 2 derart positioniert und, über die Schrauböffnungen 12, derart fixiert werden, dass der Laserkristall 2 in geeignet geneigter Weise mit dem Kühlmittelstrahl 11 beaufschlagt wird. Zur Positionierung, Fixierung und Halterung der Düse 3 können alternativ oder zusätzlich auch andere Elemente verwendet werden.

Die im vorliegenden Beispiel zweifach vorgesehenen, symmetrisch angeordneten Haltebohrungen 16 können beispielsweise bei beidseitigem lateralen Pumpen des Laserkristalls 2 mit jeweils einer Düse 3 bestückt sein. Bei einseitigem lateralen Pumpen des Laserkristalls 2, entsprechend FIG 1 und FIG 2, kann die Düse 3 in der jeweils geeigneten Haltebohrung 16 angeordnet werden. Bei nicht symmetrischer Ausgestaltung der Halterung 4 kann das erste Haltesegment auch lediglich eine Haltebohrung 16 mit entsprechenden einfach vorgesehenen Positionier- und Fixierelementen aufweisen.

Das erste Haltesegment zur Halterung, Positionierung und Fixierung des Laserkristalls 2 umfasst im vorliegenden Beispiel zwei parallele, voneinander beabstandete und fluchtend zueinander angeordnete Seitenwandungen 17, mit jeweils einem Durchbruch 18. Die in den Seitenwandungen 17 vorhandenen Durchbrüche 18 sind zueinander fluchtend angeordnet und im Querschnitt bzw. in der Kontur an den axialen Querschnitt des jeweiligen Laserkristalls 2 angepasst. Auf diese Weise kann der Laserkristall 2 in einer die Durchbrüche durchgreifenden Weise angeordnet werden.

Der Laserkristall 2 und die Halterung 4 sind derart dimensioniert, dass der Laserkristall 2 in einer die Durchbrüche 17 durchgreifenden Weise angeordnet werden kann, insbesondere derart, dass der Laserkristall 2 an voneinander abgewandten freien axialen Enden 19 spannungsfrei gelagert ist. Der Laserkristall 2, genauer die freien axialen Enden 19, erstrecken sich durch die Durchbrüche 18 hindurch, so dass die Bereiche des Endspiegels und Auskoppelspiegels, d. h. jeweilige Stirnseiten des Laserkristalls 2, frei liegen und durch die Halterung 4 und insbesondere Kühlanordnung 1 nicht beeinflusst oder beeinträchtigt werden.

Wie insbesondere aus FIG 1 bis FIG 4 zu sehen ist, erfolgt die Beaufschlagung des Laserkristalls 2 mit dem Kühlmittel in einem inneren Volumen der Halterung 4. Bereits durch diese Ausgestaltung, insbesondere durch die Verwendung der im Wesentlichen durchgehend ausgebildeten Seitenwandungen 17, sind die axialen Stirnenden des Laserkristalls 2, im Bereich des Endspielgels und/oder Auskoppelspiegels, von der Kühlflüssigkeit abgeschirmt. Um zusätzlich zu vermeiden, dass Kühlflüssigkeit über die Durchbrüche 18 zu den stirnseitigen Enden des Laserkristalls 2 gelangt und ggf. die Emission von Laserlicht beeinträchtigt, sind die Durchbrüche 18 bei der gezeigten Ausgestaltung mit Dichtelementen abgedichtet.

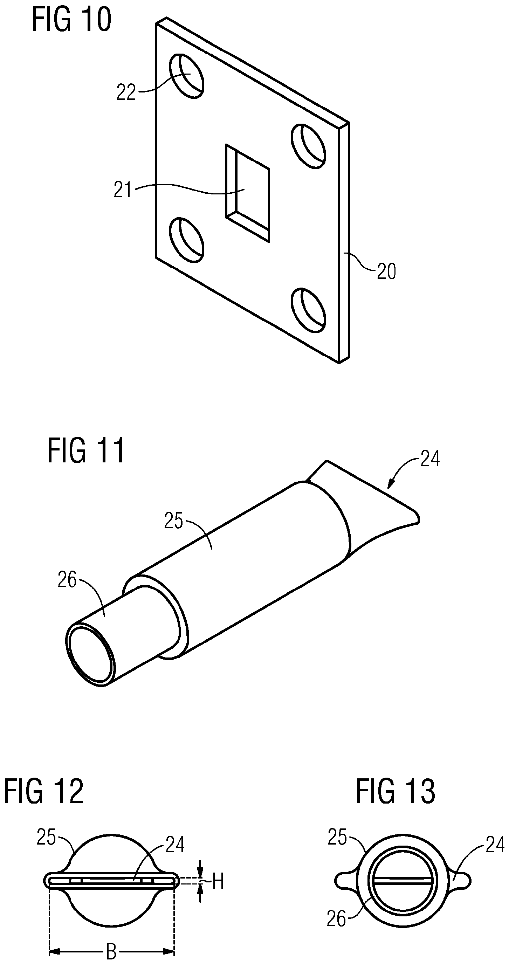

Jeder der Durchbrüche 18 ist durch ein Dichtelement abgedichtet, welches ein (nicht gezeigtes) Dichtelement und eine Druckplatte 20 umfasst. Beispielhaft ist eine Druckplatte 20 in perspektivischer Darstellung in FIG 10 gezeigt. Die Druckplatte 20 umfasst eine zu den Durchbrüchen 18 der Seitenwandungen 17 korrespondierende Ausnehmung 21 und vier Befestigungsbohrungen 22.

Die Ausnehmung 21 und Befestigungsbohrungen 22 sind derart angeordnet, dass diese bei Befestigung der Druckplatte 20 an den Außenflächen der Seitenwandungen 17 mit dem jeweiligen Durchbruch 18 und korrespondierenden, weiteren Befestigungsbohrungen 23 fluchten. Über die Befestigungsbohrungen 22, 23 kann die Druckplatte 20 insbesondere lösbar an einer jeweiligen Seitenwandung 17 befestigt werden. Die Ausnehmung 21 ist insbesondere derart gestaltet, dass der Laserkristall 2 die Druckplatte 20 durchgreifen kann, so dass der Laserkristall 2 umlaufend abgedichtet werden kann, was nachfolgend noch näher beschrieben wird.

Zur kühlmitteldichten Abdichtung der Durchbrüche 18 weisen diese abgeschrägte Kanten auf, so dass sich diese im axialen Querschnitt zum Inneren der Halterung 4 hin verjüngen. Wegen der abgeschrägten Kanten ergibt sich zwischen Laserkristall 2 und Durchbruch 18, genauer deren Kanten, ein keilförmiger Spalt. In diesen keilförmigen Spalt kann ein Dichtelement eingelegt werden. Bei entsprechender Dimensionierung des Dichtelements wird dieses bei Befestigung der Druckplatte 20 an der Seitenwandung 17 in den keilförmigen Spalt gepresst, so dass sich durch eine Pressklemmung des Dichtelements eine abdichtende Wirkung ergibt. Abgesehen von der abdichtenden Wirkung kann mit der Pressklemmung ferner eine Fixierung des Laserkristalls 2 in den Durchbrüchen 18 erreicht werden. Insoweit dienen die Druckplatte 20 und das Dichtelement auch als Befestigungselemente für den Laserkristall 2.

Die Durchbrüche 18 der Seitenwandungen 17 sind und können derart ausgebildet werden, dass der Laserkristall 2 in der jeweils erforderlichen Ausrichtung positioniert ist. Insbesondere können die Durchbrüche 18 derart ausgebildet sein, dass der zwischen den Seitenwandungen 17 gelegene Bereich des Laserkristalls 2 entsprechend den jeweiligen Anforderungen positioniert und ausgerichtet ist.

Im vorliegenden Fall ist die Ausrichtung des Laserkristalls 2 durch die Durchbrüche 18 fest vorgegeben. Denkbar wäre es, dass die Durchbrüche 18 und entsprechende Befestigungs- und/oder Klemmelemente vorhanden sind, welche eine flexible Ausrichtung des Laserkristalls 2 ermöglichen, beispielsweise indem der Laserkristall 2 in verschiedenen, bezüglich der Axialrichtung verdrehten Positionen fixiert werden kann.

Die Möglichkeit zur flexiblen Ausrichtung des Laserkristalls 2 ist jedoch dann von geringerer Relevanz, wenn es ausreichende Möglichkeiten zur Ausrichtung und Positionierung der Düse 3 und damit des Kühlmittelstrahls 11 gibt.

Die Position und Ausrichtung der Düse 3 ist in den vorliegenden Ausführungsbeispielen insbesondere auf Grund der Haltebohrungen 16 und Schrauböffnungen 12 mit entsprechenden Schraubbefestigungen in ausreichendem Maße einstellbar. Insbesondere kann die Düse 3 derart angeordnet und positioniert werden, dass eine Düsenmündung 24 der Düse 3 zwischen, genauer im Volumen zwischen den Seitenwandungen 17 positioniert ist und die laterale Seitenfläche 8 des Laserkristalls 2 unter dem jeweils geeigneten Einfallswinkel α mit dem Kühlmittelstrahl 11 beaufschlagt werden kann.

Die Düse 3 als solche wird nun mit Bezug zu FIG 11 bis FIG 13 näher beschrieben. FIG 11 zeigt die Düse 3 in perspektivischer Darstellung, während FIG 12 und FIG 13 die Düse 3 in axialen Ansichten zeigen.

Die Düse 3 umfasst einen rohrförmigen Düsenkörper 25, an dessen einem Ende die, im vorliegenden Fall sich flachdüsenartig verjüngend ausgebildete, Düsenmündung 24, und an dessen anderem Ende ein verjüngter Koppelabschnitt 26 vorhanden sind. Über den Koppelabschnitt 26 kann die Düse 3 mit einer Kühlmittelleitung verbunden werden.

Die Düsenmündung 24 ist im vorliegenden Fall derart flach und breit ausgebildet, dass der Laserkristall 2 in einer geradlinig verlaufenden Auftreffzone mit dem Kühlmittelstrahl 11 beaufschlagt werden kann. Eine geradlinige Auftreffzone hat sich für die Ausbildung einer laminaren Kühlmittelströmung als besonders vorteilhaft erwiesen. Die Breite und Öffnungsweite der Düsenmündung 24 sind vorliegend auch derart ausgebildet, dass die Düse 3 zwischen den Seitenwandungen 17 ohne Weiteres angeordnet werden kann, und dass der Laserkristall 2 im Wesentlichen über die gesamte Länge zwischen den Seitenwandungen 17 mit dem Kühlmittelstrahl 11 beaufschlagt werden kann. Letzteres bedeutet insbesondere, dass sich die Auftreffzone über die zwischen den Seitenwandungen 17 gelegene axiale Länge des Laserkristalls 2 erstreckt. Die Länge des Laserkristalls 2 zwischen den Seitenwandungen 17 Das ist für eine wirksame Kühlung des Laserkristalls 2 von besonderem Vorteil.

Insgesamt kann mit der vorgeschlagenen Kühlanordnung 1 ein besonders wirksames Verfahren zur Kühlung des Laserkristalls 2 durchgeführt werden, indem, wie ausführlich beschrieben, die Seitenfläche 8 des Laserkristalls 2 unter parallelem oder schrägem Einfall mit dem gerichteten Kühlmittelstrahl 11 beaufschlagt wird, wobei als Kühlmittelstrahl 11 insbesondere ein Flachstrahl, bevorzugt Parallel-Flachstrahl, verwendet werden kann. Mit einer entsprechenden Beaufschlagung des Laserkristalls 2 bzw. der Seitenfläche 8 kann ein laminarer Kühlmittelstrom entlang der Seitenfläche 8 erreicht werden, welcher eine besonders wirksame, da insbesondere blasenfreie, Kühlung des Laserkristalls 2 ermöglicht.

### Bezugszeichenliste

- 1: Kühlanordnung
- 2: Laserkristall
- 3: Düse
- 4: Halterung
- 5: Laseranordnung
- 6: Pumpstrahlungsquelle
- 7: Pumpstrahlung
- 8: Seitenfläche
- 9: Axialrichtung
- 10: Eintrittsfenster
- 10a: Eintrittsöffnung
- 11,11': Kühlmittelstrahl
- 12: Schrauböffnung
- 13: obere Längskante
- 14: Abflussöffnung
- 15: obere Stirnseite
- 16: Haltebohrung
- 17: Seitenwandung
- 18: Durchbruch
- 19: freies axiales Ende
- 20: Druckplatte
- 21: Ausnehmung
- 22: Befestigungsbohrung
- 23: weitere Befestigungsbohrung
- 24: Düsenmündung
- 25: Düsenkörper
- 26: Koppelabschnitt
- 80: Pumpfläche

- α: Inzidenzwinkel
- B: Breite
- H: Höhe
- K: Kühlmittel

## Patentansprüche

1. Laseranordnung (5) umfassend ein laseraktives Festkörpermaterial, eine Kühlanordnung (1) mit einem flüssigen Kühlmittel, zur aktiven Flüssigkühlung des laseraktiven Festkörpermaterials (2) und eine Pumpstrahlungsquelle (6) zum optischen Pumpen des laseraktiven Festkörpermaterials (2), wobei die Kühlanordnung (1) eine Düseneinheit (3) umfasst, welche ausgebildet und eingerichtet ist zur Beaufschlagung des laseraktiven Festkörpermaterials (2) mit einem gerichteten Kühlmittelstrahl (11) eines flüssigen Kühlmittels (K), wobei
die Düseneinheit (3) und das laseraktive Festkörpermaterial (2) derart angeordnet, ausgebildet und eingerichtet sind, dass im Betrieb nur eine Teilfläche (8) der Oberfläche des laseraktiven Festkörpermaterials (2) mit dem Kühlmittelstrahl (11) beaufschlagt wird, wobei die mit dem Kühlmittelstrahl (K) beaufschlagte Teilfläche (8) der Oberfläche des laseraktiven Festkörpermaterials (2) die beim optischen Pumpen mit Pumpstrahlung (7) der Pumpstrahlungsquelle (6) beaufschlagte Pumpfläche (80) an der Oberfläche des laseraktiven Festkörpermaterials beinhaltet, und wobei der Kühlmittelstrahl (11) parallel zur oder schräg zur Teilfläche (8) der Oberfläche des laseraktiven Festkörpermaterials (2) gerichtet ist.

2. Laseranordnung (5) nach Anspruch 1, umfassend des Weiteren zumindest eines der folgenden Merkmale:
- die Düseneinheit (3) ist derart ausgebildet und eingerichtet, dass die Teilfläche des Weiteren eine parallel zur die Laseremissionsrichtung bildenden Axialrichtung (9) des laseraktiven Festkörpermaterials (2) verlaufende laterale Seitenfläche (8) ist;
- die Düseneinheit (3) ist derart ausgebildet und eingerichtet und relativ zur Teilfläche (8) der Oberfläche des laseraktiven Festkörpermaterials (2) angeordnet, dass sich an der Teilfläche (8) ein Strömungsfilm des Kühlmittels (K) ausbildet, wobei, quer zur Strömungsrichtung gesehen, die Breite des Strömungsfilms oder Kühlmittelstrahls (11) vorzugsweise wenigstens so groß wie die Querabmessung der überströmten Teilfläche (8) ist;
- der Kühlmittelstrahl (11), trifft schräg zur Teilfläche (8) der Oberfläche des laseraktiven Festkörpermaterials (2) auf unter einem Einfallswinkel im Bereich von im Bereich von 0 Grad bis 10 Grad, insbesondere 0,5 Grad bis 10 Grad.

3. Laseranordnung (5) nach einem der vorhergehenden Ansprüche, bei der sich zwischen der Düseneinheit (3) und dem laseraktiven Festkörpermaterial eine Gasatmosphäre, insbesondere Luft, befindet, in der sich der gerichtete Kühlmittelstrahl als freier Strahl bis zur Oberfläche des laseraktiven Festkörpermaterials ausbreitet.

4. Laseranordnung (5) nach einem der vorhergehenden Ansprüche, wobei die Düseneinheit zumindest eine Düse (3) aufweist, die einen Düsenkörper (25) und eine Düsenmündung (24) aufweist, wobei die Breite (H) der Düsenmündung (24), die der Dicke des Kühlmittelstrahls (11) beim Austritt entspricht, deutlich kleiner ist als die Länge (B) der Düsenmündung (24), die der Breite des Kühlmittelstrahls (11) beim Austritt entspricht.

5. Laseranordnung (5) nach Anspruch 4, umfassend des Weiteren zumindest eines der folgenden Merkmale:
- der Düsenkörper ist rohrförmig;
- die Düsenmündung ist flachdüsenartig;
- die Breite (H) der Düsenmündung (24) liegt in einem Bereich zwischen 100 µm und 1000 µm liegt.

6. Laseranordnung (5) nach Anspruch 4 oder 5, umfassend des Weiteren eine Halterung (4) mit einem ersten Haltesegment zur Halterung des laseraktiven Festkörpermaterials (2) und einem zweiten Haltesegment (12, 16) zur Halterung, Fixierung und Ausrichtung der zumindest einen Düse (3) der Düseneinheit.

7. Laseranordnung (5) nach Anspruch 6, umfassend des Weiteren zumindest eines der folgenden Merkmale:
- das laseraktive Festkörpermaterial liegt in Quaderform vor;
- das laseraktive Festkörpermaterial ist stabartig quaderförmig ausgebildet;
- die Halterung (4) ist einstückig ausgebildet;
- das erste Haltesegment weist zwei parallele, zueinander fluchtende und voneinander beabstandete Seitenwandungen (17) zur, bevorzugt spannungsfreien, Lagerung des laseraktiven Festkörpermaterials (2) auf;
- die Halterung (4) weist als zweites Haltesegment eine quer, insbesondere senkrecht, zu den Seitenwandungen (17) verlaufende Stirnwandung (15) zur Halterung der zumindest einen Düse (3) auf;
- die Halterung, Fixierung und Ausrichtung der zumindest einen Düse (3) ist derart, dass eine Düsenmündung (24) einer durch das zweite Haltesegment gehalterten Düse (3) zwischen den Seitenwandungen (17) positionierbar ist;
- die Halterung, Fixierung und Ausrichtung der zumindest einen Düse (3) ist derart, dass eine zwischen den Seitenwandungen (17) verlaufende Oberfläche, insbesondere laterale Seitenfläche (8), des laseraktiven Festkörpermaterials (2) mit dem gerichteten Kühlmittelstrahl (11) beaufschlagbar ist;
- die Seitenwandungen (17) weisen zwei, insbesondere zueinander fluchtende, Durchbrüche (18) auf, in welchen ein im Querschnitt der Kontur der Durchbrüche (18) angepasstes laseraktives Festkörpermaterial (2) die Durchbrüche (18) durchgreifend an voneinander abgewandten freien axialen Enden (19) gelagert werden kann.

8. Laseranordnung (5) nach Anspruch 7, wobei die Kühlanordnung (1) des Weiteren zwei mit den Seitenwandungen (17) in austauschbar lösbarer Weise verbindbare, Dichtelemente ausgebildet zur kühlmitteldichten Abdichtung jeweils eines freien axialen Endes (19) eines die Durchbrüche (18) durchgreifenden laseraktiven Festkörpermaterials (2) zumindest entlang der Innenkontur des jeweiligen Durchbruchs (18) umfasst.

9. Laseranordnung (5) nach Anspruch 8, umfassend des Weiteren zumindest eines der folgenden Merkmale:
- jedes Dichtelement weist ein Dichtmittel und eine Druckplatte (20) auf, durch welche ein jeweiliges Dichtelement im montierten Zustand mit einer in Richtung der jeweiligen Seitenwandung (17) wirkenden Kraft beaufschlagt werden kann;
- die Durchbrüche (18) weisen in Richtung der durch die jeweilige Druckplatte (20) unmittelbar entstehenden Kraft sich verjüngende Querschnitte auf.

10. Laseranordnung (1) nach einem der Ansprüche 1 bis 9, wobei das laseraktive Festkörpermaterial (2) ein YAG-Material, insbesondere ein Erbium:YAG-, Nd:YAG oder Ho:YAG-Material, oder ein Vanadat, insbesondere Yttrium-Vanadium-Oxid oder Yttrium-Scandium-Gallium-Granat, basiertes Lasermaterial ist; und/oder wobei die Pumpstrahlungsquelle (6), das laseraktive Festkörpermaterial (2) und die Kühlanordnung (1) derart angeordnet sind, dass im Betrieb die Pumpstrahlung (7) durch das Kühlmittel (K) an oder auf der Pumpfläche (80) verläuft oder hindurchtritt.

11. Verfahren zur aktiven Kühlung eines laseraktiven Festkörpermaterials (2), bei einer Laseranordnung nach Anspruch einem der Ansprüche 1 bis 10, wobei eine Oberfläche des laseraktiven Festkörpermaterials (2) mit der Düseneinheit (3) mit einem gerichteten Kühlmittelstrahl (11) eines flüssigen Kühlmittels (K), beaufschlagt wird, wobei
nur eine Teilfläche (8) der Oberfläche des laseraktiven Festkörpermaterials (2) mit dem Kühlmittelstrahl (11) beaufschlagt wird, wobei
die mit dem Kühlmittelstrahl (11) beaufschlagte Teilfläche (8) der Oberfläche des laseraktiven Festkörpermaterials (2) die beim optischen Pumpen mit Pumpstrahlung (7) der Pumpstrahlungsquelle (6) beaufschlagte Pumpfläche (80) an der Oberfläche des laseraktiven Festkörpermaterials (2) beinhaltet, und wobei der Kühlmittelstrahl (11) parallel zur oder schräg zur Teilfläche (8) der Oberfläche des laseraktiven Festkörpermaterials (2) gerichtet ist.

12. Verfahren nach Anspruch 11, bei dem sich der gerichtete Kühlmittelstrahl in der an das laseraktive Festkörpermaterial angrenzenden Gasatmosphäre, insbesondere Luft, als freier Strahl bis zur Oberfläche des laseraktiven Festkörpermaterials ausbreitet und dann in einer Auftreff- oder Aufprallzone auf das laseraktive Festkörpermaterial auftrifft und nun an dessen zu kühlender Oberfläche als Strömungsfilm oder Oberflächenströmung entlang strömt.

13. Verfahren nach Anspruch 12, umfassend des Weiteren zumindest eines der folgenden Merkmale:
- die Strömungsrichtung oder der Strömungsverlauf des Strömungsfilms oder der Oberflächenströmung ist durch die Richtung des Kühlmittelstrahls vor dem Auftreffen relativ zur Oberfläche und durch die Gestalt der überströmten Oberfläche bestimmt;
- das Kühlmittel verlässt in einer Abriss- oder Abhebzone wieder die Oberfläche des laseraktiven Festkörpermaterials und breitet sich im Allgemeinen wieder als freier Kühlmittelstrahl wenigstens ein Stück weit weiter aus.

14. Verfahren nach einem der Ansprüche 11 bis 13, umfassend des Weiteren zumindest eines der folgenden Merkmale:
der Kühlmittelstrahl (11) trifft schräg zur Teilfläche (8) unter einem Einfallswinkel im Bereich von 0 Grad bis 10 Grad, insbesondere 0,5 Grad bis 10 Grad, auf;
- als Kühlmittelstrahl (11) ein Flachstrahl verwendet;
- als Kühlmittelstrahl (11) wird ein Parallel-Flachstrahl verwendet.

15. Verfahren nach einem der Ansprüche 11 bis 14, umfassend des Weiteren zumindest eines der folgenden Merkmale:
- mittels des Kühlmittelstrahls (11) wird die vom Kühlmittel überströmte Teilfläche (8), insbesondere die Pumpfläche (80), von Ablagerungen oder Verschmutzungen freigehalten oder befreit;
- die Strömungsgeschwindigkeit des Kühlmittels im Kühlmittelstrahl, insbesondere nach dem Austritt aus der Düse oder Düseneinheit, beträgt im Allgemeinen mindestens 2 m/s, insbesondere zwischen 2 m/s und 50 m/s, bevorzugt zwischen 5 m/s und 10 m/s und vorzugsweise zwischen 8 m/s und 10 m/s.

## Claims

1. Laser arrangement (5) comprising a laser-active solid material, a cooling arrangement (1) having a liquid coolant for active liquid cooling of the laser-active solid material (2), and a pump radiation source (6) for optically pumping the laser-active solid material (2), wherein the cooling arrangement (1) comprises a nozzle unit (3) which is designed and set up to subject the laser-active solid material (2) to a directed coolant jet (11) of a liquid coolant (K), wherein the nozzle unit (3) and the laser-active solid material (2) are arranged, designed and set up such that, during operation, only a subsurface (8) of the surface of the laser-active solid material (2) is subjected to the coolant jet (11), wherein the subsurface (8) of the surface of the laser-active solid material (2) subjected to the coolant jet (K) includes, on the surface of the laser-active solid material, the pump surface (80) that is subjected to pump radiation (7) from the pump radiation source (6) during optical pumping, and wherein the coolant jet (11) is directed in parallel with or obliquely with respect to the subsurface (8) of the surface of the laser-active solid material (2).

2. Laser arrangement (5) according to claim 1, further comprising at least one of the following features:
- the nozzle unit (3) is designed and set up such that the subsurface is also a lateral side surface (8) that extends in parallel with the axial direction (9), forming the laser emission direction, of the laser-active solid material (2);
- the nozzle unit (3) is designed and set up and is arranged relative to the subsurface (8) of the surface of the laser-active solid material (2) such that a flow film of the coolant (K) is formed on the subsurface (8), wherein, viewed transversely to the flow direction, the width of the flow film or coolant jet (11) is preferably at least as large as the transverse dimension of the subsurface (8) over which flow passes;
- the coolant jet (11) impinges obliquely with respect to the subsurface (8) of the surface of the laser-active solid material (2) at an angle of incidence in the range of from 0 degrees to 10 degrees, in particular 0.5 degrees to 10 degrees.

3. Laser arrangement (5) according to either of the preceding claims, wherein between the nozzle unit (3) and the laser-active solid material there is a gas atmosphere, in particular air, in which the directed coolant jet spreads, in the form of a free jet, to the surface of the laser-active solid material.

4. Laser arrangement (5) according to any of the preceding claims, wherein the nozzle unit has at least one nozzle (3) which has a nozzle body (25) and a nozzle mouth (24), wherein the width (H) of the nozzle mouth (24), which corresponds to the thickness of the coolant jet (11) upon exiting, is significantly smaller than the length (B) of the nozzle mouth (24), which corresponds to the width of the coolant jet (11) upon exiting.

5. Laser arrangement (5) according to claim 4, further comprising at least one of the following features:
- the nozzle body is tubular;
- the nozzle mouth is in the manner of a flat nozzle;
- the width (H) of the nozzle mouth (24) is in a range between 100 µm and 1000 µm.

6. Laser arrangement (5) according to either claim 4 or claim 5, further comprising a holder (4) having a first holding segment for holding the laser-active solid material (2) and a second holding segment (12, 16) for holding, securing and orienting the at least one nozzle (3) of the nozzle unit.

7. Laser arrangement (5) according to claim 6, further comprising at least one of the following features:
- the laser-active solid material has a parallelepiped shape;
- the laser-active solid material is parallelepiped in the manner of a rod;
- the holder (4) is formed in one piece;
- the first holding segment has two parallel, mutually aligned and mutually spaced side walls (17) for, preferably stress-free, mounting of the laser-active solid material (2);
- the holder (4) has, as the second holding segment, an end wall (15) which extends transversely, in particular perpendicularly, with respect to the side walls (17) and is intended for holding the at least one nozzle (3);
- the at least one nozzle (3) is held, secured and oriented such that a nozzle mouth (24) of a nozzle (3) held by the second holding segment can be positioned between the side walls (17);
- the at least one nozzle (3) is held, secured and oriented such that a surface, in particular a lateral side surface (8), of the laser-active solid material (2) that extends between the side walls (17) can be subjected to the directed coolant jet (11);
- the side walls (17) have two, in particular mutually aligned, openings (18), in which a laser-active solid material (2) that is adapted in cross section to the contour of the openings (18) can be mounted, so as to pass through the openings (18), on free axial ends (19) facing away from each other.

8. Laser arrangement (5) according to claim 7, wherein the cooling arrangement (1) also comprises two sealing elements which can be connected to the side walls (17) in a replaceably releasable manner and are each designed for the coolant-tight sealing, at least along the inner contour of the particular opening (18), of a free axial end (19) of a laser-active solid material (2) passing through the openings (18).

9. Laser arrangement (5) according to claim 8, further comprising at least one of the following features:
- each sealing element has a sealing means and a pressure plate (20) by means of which a particular sealing element, when installed, can be subjected to a force acting toward the particular side wall (17);
- the openings (18) have cross sections tapering in the direction of the force generated directly by the particular pressure plate (20).

10. Laser arrangement (1) according to any of claims 1 to 9, wherein the laser-active solid material (2) is a laser material based on YAG material, in particular a laser material based on erbium:YAG, Nd:YAG or Ho:YAG material, or a laser material based on vanadate, in particular yttrium vanadium oxide or yttrium scandium gallium garnet; and/or wherein the pump radiation source (6), the laser-active solid material (2) and the cooling arrangement (1) are arranged such that, during operation, the pump radiation (7) extends or passes through the coolant (K) at or on the pump surface (80).

11. Method for actively cooling a laser-active solid material (2) in a laser arrangement according to any of claims 1 to 10, wherein a surface of the laser-active solid material (2) is subjected to a directed coolant jet (11) of a liquid coolant (K) by means of the nozzle unit (3), wherein only a subsurface (8) of the surface of the laser-active solid material (2) is subjected to the coolant jet (11), wherein the subsurface (8) of the surface of the laser-active solid material (2) subjected to the coolant jet (11) includes, on the surface of the laser-active solid material (2), the pump surface (80) that is subjected to pump radiation (7) from the pump radiation source (6) during optical pumping, and wherein the coolant jet (11) is directed in parallel with or obliquely with respect to the subsurface (8) of the surface of the laser-active solid material (2).

12. Method according to claim 11, wherein the directed coolant jet in the gas atmosphere, in particular air, adjacent to the laser-active solid material spreads, in the form of a free jet, to the surface of the laser-active solid material and then impinges on the laser-active solid material in an impingement or impact zone, whereupon it flows, in the form of a flow film or surface flow, along the surface of said material to be cooled.

13. Method according to claim 12, further comprising at least one of the following features:
- the flow direction or flow path of the flow film or of the surface flow is determined by the direction of the coolant jet, prior to impingement, relative to the surface and by the shape of the surface over which flow passes;
- the coolant leaves the surface of the laser-active solid material again in a separation or removal zone and generally spreads again in the form of a free coolant jet at least a little further along.

14. Method according to any of claims 11 to 13, further comprising at least one of the following features:
the coolant jet (11) impinges obliquely with respect to the subsurface (8) at an angle of incidence in the range of from 0 degrees to 10 degrees, in particular 0.5 degrees to 10 degrees;
- a flat jet is used as the coolant jet (11);
- a parallel flat jet is used as the coolant jet (11).

15. Method according to any of claims 11 to 14, further comprising at least one of the following features:
- the subsurface (8), in particular the pump surface (80), over which the coolant flows is kept free or is freed of deposits or soiling by means of the coolant jet (11);
- the flow rate of the coolant in the coolant jet, in particular after exiting the nozzle or nozzle unit, is generally at least 2 m/s, in particular between 2 m/s and 50 m/s, preferably between 5 m/s and 10 m/s and more preferably between 8 m/s and 10 m/s.

## Revendications

1. Système laser (5) comprenant un matériau solide actif laser, un système de refroidissement (1) avec un liquide de refroidissement, pour le refroidissement liquide actif du matériau solide actif laser (2) et une source de rayonnement de pompage (6) pour le pompage optique du matériau solide actif laser (2), le système de refroidissement (1) comprenant une unité de buse (3) qui est conçue et configurée pour l'exposition d'un matériau solide actif laser (2) au jet de liquide de refroidissement (11) dirigé d'un liquide de refroidissement (K),
l'unité de buse (3) et le matériau solide actif laser (2) étant agencés, conçus et configurés de telle sorte que pendant le fonctionnement, seule une surface partielle (8) de la surface du matériau solide actif laser (2) est exposée au jet de liquide de refroidissement (11), la surface partielle (8) de la surface du matériau solide actif laser (2) exposée au jet de liquide de refroidissement (K) comprenant la surface de pompage (80) exposée à un rayonnement de pompage (7) de la source de rayonnement de pompage (6) pendant le pompage optique sur la surface du matériau solide actif laser, et le jet de liquide de refroidissement (11) étant dirigé parallèlement à ou incliné par rapport à la surface partielle (8) de la surface du matériau solide actif laser (2).

2. Système laser (5) selon la revendication 1, comprenant en outre au moins l'une des caractéristiques suivantes:
- l'unité de buse (3) est conçue et montée de telle sorte que la surface partielle est également une surface latérale (8) s'étendant parallèlement à la direction axiale (9) du matériau solide actif laser (2) formant la direction d'émission laser;
- l'unité de buse (3) est conçue et montée et est agencée par rapport à la surface partielle (8) de la surface du matériau solide laser actif (2) de telle sorte qu'un film d'écoulement du liquide de refroidissement (K) est formé sur la surface partielle (8), vue transversalement par rapport à la direction d'écoulement, la largeur du film d'écoulement ou du jet de liquide de refroidissement (11) étant de préférence au moins aussi grande que la dimension transversale de la surface partielle (8) débordante;
- le jet de liquide de refroidissement (11) frappe la surface partielle (8) de la surface du matériau solide laser actif (2) de manière inclinée selon un angle d'incidence dans la plage de 0 degrés à 10 degrés, en particulier de 0,5 degrés à 10 degrés.

3. Système laser (5) selon l'une des revendications précédentes, une atmosphère gazeuse, en particulier de l'air, existant entre l'unité de buse (3) et le matériau solide actif laser, dans laquelle atmosphère gazeuse le jet de liquide de refroidissement dirigé se propage jusqu'à la surface du matériau solide actif laser en tant que jet libre.

4. Système laser (5) selon l'une des revendications précédentes, dans lequel l'unité de buse présente au moins une buse (3) qui présente un corps de buse (25) et une embouchure de buse (24), la largeur (H) de l'embouchure de buse (24), qui correspond à l'épaisseur du jet de liquide de refroidissement (11) à la sortie, étant nettement plus petite que la longueur (B) de l'embouchure de buse (24), qui correspond à la largeur du jet de liquide de refroidissement (11) à la sortie.

5. Système laser (5) selon la revendication 4, comprenant en outre au moins l'une des caractéristiques suivantes:
- le corps de buse est tubulaire;
- l'embouchure de buse est en forme de buse plate;
- la largeur (H) de l'embouchure de buse (24) est comprise dans une plage allant de 100 µm à 1000 µm.

6. Système laser (5) selon la revendication 4 ou 5, comprenant en outre un support (4) avec un premier segment de support pour supporter le matériau solide actif laser (2) et un second segment de support (12, 16) pour supporter, fixer et aligner l'au moins une buse (3) de l'unité de buse.

7. Système laser (5) selon la revendication 6, comprenant en outre au moins l'une des caractéristiques suivantes:
- le matériau solide actif laser se présente sous forme de parallélépipède;
- le matériau solide actif laser est parallélépipédique en forme de tige;
- le support (4) est constitué d'une seule pièce;
- le premier segment de support présente deux parois latérales (17) parallèles, en affleurement l'une avec l'autre et espacées l'une de l'autre pour le stockage, de préférence sans contrainte, du matériau solide actif laser (2);
- le support (4) présente, comme second segment de support, une paroi frontale (15) s'étendant transversalement, en particulier perpendiculairement, aux parois latérales (17) pour supporter l'au moins une buse (3);
- le support, la fixation et l'alignement de l'au moins une buse (3) sont tels qu'une embouchure de buse (24) d'une buse (3) supportée par le second segment de support peut être positionnée entre les parois latérales (17);
- le support, la fixation et l'alignement de l'au moins une buse (3) sont tels qu'une surface du matériau solide actif laser (2) s'étendant entre les parois latérales (17), en particulier une surface latérale (8), peut être exposée au jet de liquide de refroidissement (11) dirigé;
- les parois latérales (17) présentent deux ouvertures (18), en particulier en affleurement l'une avec l'autre, dans lesquelles une matériau solide actif laser (2) adaptée en section transversale au contour des ouvertures (18) peut être montée à travers les ouvertures (18) aux extrémités axiales libres (19) opposées l'une à l'autre.

8. Système laser (5) selon la revendication 7, dans lequel le système de refroidissement (1) comprend en outre deux éléments d'étanchéité qui peuvent être reliés aux parois latérales (17) de manière amovible et interchangeable et sont conçus pour rendre étanche au liquide de refroidissement une extrémité axiale libre (19) respective d'un matériau solide actif laser (2) pénétrant à travers les ouvertures (18) au moins le long du contour intérieur de l'ouverture (18) respective.

9. Système laser (5) selon la revendication 8, comprenant en outre au moins l'une des caractéristiques suivantes:
- chaque élément d'étanchéité présente un moyen d'étanchéité et une plaque de pression (20), au moyen desquels un élément d'étanchéité respectif, à l'état assemblé, peut être exposé à une force agissant en direction de la paroi latérale (17) respective;
- les ouvertures (18) présentent des sections transversales se rétrécissant dans le sens de la force directement générée par la plaque de pression (20) respective.

10. Système laser (1) selon l'une des revendications 1 à 9, dans lequel le matériau solide actif laser (2) est un matériau laser à base d'un matériau YAG, en particulier d'un matériau erbium: YAG, Nd: YAG ou Ho: YAG, ou d'un vanadate, en particulier d'oxyde d'yttrium-vanadium ou de grenat d'yttrium-scandium-gallium; et/ou dans lequel la source de rayonnement de pompage (6), le matériau solide actif laser (2) et le système de refroidissement (1) sont agencés de telle sorte que le rayonnement de pompage (7) s'étend ou passe à travers le liquide de refroidissement (K) contre ou sur la surface de pompage (80) pendant le fonctionnement.

11. Procédé pour refroidir activement un matériau solide actif laser (2), dans un système laser selon l'une des revendications 1 à 10, une surface du matériau solide actif laser (2) étant exposée à un jet de liquide de refroidissement (11) dirigé d'un liquide de refroidissement (K) avec l'unité de buse (3),
seule une surface partielle (8) de la surface du matériau solide actif laser (2) étant exposée au jet de liquide de refroidissement (11),
la surface partielle (8) de la surface du matériau solide actif laser (2) exposée au jet de liquide de refroidissement (11) comprenant une surface de pompage (80) exposée au rayonnement de pompage (7) de la source de rayonnement de pompage (6) pendant le pompage optique sur la surface du matériau solide actif laser (2), et le jet de liquide de refroidissement (11) étant dirigé parallèlement à ou incliné par rapport à la surface partielle (8) de la surface du matériau solide actif laser (2).

12. Procédé selon la revendication 11, dans lequel le jet de liquide de refroidissement dirigé dans l'atmosphère gazeuse adjacente au matériau solide actif laser, en particulier de l'air, se propage en tant que jet libre jusqu'à la surface du matériau solide actif laser puis frappe le matériau solide actif laser dans une zone d'impact ou de collision et s'écoule ensuite le long de la surface à refroidir en tant que film d'écoulement ou d'écoulement de surface.

13. Procédé selon la revendication 12, comprenant en outre au moins l'une des caractéristiques suivantes:
- le sens d'écoulement ou le cours d'écoulement du film d'écoulement ou de l'écoulement de surface est déterminé par la direction du jet de liquide de refroidissement avant impact par rapport à la surface et par la forme de la surface débordante;
- le liquide de refroidissement quitte à nouveau la surface du matériau solide actif laser dans une zone de décrochage ou de décollage et se propage généralement à nouveau en tant que jet de liquide de refroidissement libre au moins un peu plus loin.

14. Procédé selon l'une des revendications 11 à 13, comprenant en outre au moins l'une des caractéristiques suivantes:
le jet de liquide de refroidissement (11) frappe la surface partielle (8) de manière inclinée selon un angle d'incidence dans la plage de 0 degrés à 10 degrés, en particulier de 0,5 degrés à 10 degrés;
- un jet plat est utilisé comme jet de liquide de refroidissement (11);
- un jet plat parallèle est utilisé comme jet de liquide de refroidissement (11).

15. Procédé selon l'une des revendications 11 à 14, comprenant en outre au moins l'une des caractéristiques suivantes:
- la surface partielle (8) débordant de liquide de refroidissement, en particulier la surface de pompage (80), est maintenue exempte de dépôts ou d'impuretés au moyen du jet de liquide de refroidissement (11);
- la vitesse d'écoulement du liquide de refroidissement dans le jet de liquide de refroidissement, en particulier à la sortie de la buse ou de l'unité de buse, est généralement d'au moins 2 m/s, en particulier comprise entre 2 m/s et 50 m/s, préférentiellement entre 5 m/s et 10 m/s et plus préférentiellement entre 8 m/s et 10 m/s.
